Europäisches Patentamt

(19) European Patent Office  (11) Publication number: **0 075 359**

Office européen des brevets  **B1**

(12)  **EUROPEAN PATENT SPECIFICATION**

(45) Date of publication of patent specification: **05.06.85**  (51) Int. Cl.⁴: **C 05 C 1/02**

(21) Application number: **82201130.0**

(22) Date of filing: **13.09.82**

(54) Process for cooling hot ammoniumnitrate-containing granules, as well as granules obtained by applying this process.

(30) Priority: **17.09.81 NL 8104285**

(43) Date of publication of application:
**30.03.83 Bulletin 83/13**

(45) Publication of the grant of the patent:
**05.06.85 Bulletin 85/23**

(84) Designated Contracting States:
**AT BE DE FR GB IT NL SE**

(56) References cited:
**GB-A-1 171 976**
**GB-A-1 581 761**
**GB-A-2 045 735**
**GB-A-2 064 995**
**NL-A- 248 543**

(73) Proprietor: **UNIE VAN KUNSTMESTFABRIEKEN B.V.**
**Maliebaan 81**
**NL-3581 CG Utrecht (NL)**

(72) Inventor: **Willems, Michael Hendrik**
**Nassaustraat 9**
**NL-6166 BD Geleen (NL)**
Inventor: **Rutten, Hendricus Johannes Jozef**
**Kasteel Frijmersonstraat 33**
**NL-6043 XK Roermond (NL)**

(74) Representative: **Roeffen, Wilhelmus Johannes Maria et al**
**OCTROOIBUREAU DSM Postbus 9**
**NL-6160 MA Geleen (NL)**

Courier Press, Leamington Spa, England.

EP 0 075 359 B1

**0 075 359**

**Description**

The invention relates to a process for cooling hot ammoniumnitrate-containing granules, coming from a granulating zone, by means of cooling in a fluidized bed.

Such a process for cooling ammoniumnitrate granules is known from the USSR patent specification 334.180. According to this known process hot ammoniumnitrate granules are first cooled to 80—125°C and subsequently to 40—50°C in a bed fluidized with air pre-heated to 35—70°C, in which process granules having an increased mechanical strength are obtained. A disadvantage of this known process is that the granules thus obtained seriously cake together so that, in order to obtain a marketable product, the granules must be treated with a large quantity of a coating agent, which, of course, involves high costs, reduces the nutrient content of the product obtained, while on the other hand the quantity applied is not always sufficient, because for reasons of safety a limit (0,4%) has been set for organic coating agents applied to ammoniumnitrate-containing fertilizers.

According to the process described in the Netherlands patent application 7.902.086 laid open to public inspection, hot ammoniumnitrate granules stabilized with magnesiumnitrate can be cooled by first cooling them in a fluidized bed, for instance to 80°C, subsequently slowly cooling them to 50°C in a drum cooler and finally cooling the product further in any desired way, in which process granules are obtained having an increased bulk density. A disadvantage of this process is that between 70 and 50°C the cooling must proceed very slowly, which requires a long residence time in the relative cooling zone and, consequently, extensive cooling equipment.

Now, the invention provides a process which makes it possible to cool hot ammoniumnitrate-containing granules by means of a relatively small cooling installation, in which process granules are obtained showing a strongly reduced tendency to cake together.

This is achieved, according to the invention, in that the hot granules, having a temperature higher than about 90°C, are cooled in a first fluidized bed to a temperature of between 55 and 75°C, the granules are allowed to age for a period of time of from 1 to 10 minutes without being heated or cooled, and the granules are subsequently cooled in a second fluidized bed to a temperature of between 30 and 50°C.

The time during which the granules are allowed to age is not critical within the limits given above. Preferably the granules are allowed to age for 2—5 minutes. In this connection it is important that, during this ageing, the granules should neither be heated nor cooled in order to prevent changes in the crystal modification of the ammoniumnitrate. It has been found that during this ageing step a slight temperature increase will occur in the granules. An explanation for this phenomenon is that the granules fed to the first fluidized bed contain ammoniumnitrate having crystal modification II, and that the granules coming from this bed are indeed supercooled, but still contain the same ammoniumnitrate crystal modification. During the ageing step they subsequently proceed to the stable crystal modification III, which is accompanied by a slight development of heat.

It has been found that the transition from modification II to III can be promoted by adding to the granules fed to the ageing step and/or to the granules during this step a quantity of granules containing ammoniumnitrate having crystal modification III. Preferably part of the granules obtained from the ageing step is used for this purpose.

According to the invention the hot granules are cooled in the first fluidized bed to a temperature of between 55 and 75°C. It has been found that these temperature limits are rather critical. When cooled to lower temperatures, particularly below 50°C, granules are obtained which will cake together very strongly. An explanation for this phenomenon is that, during the cooling process, the granules will then proceed from crystal modification II direct to an unstable crystal modification IV and then again to modification III. Such abrupt changes are accompanied by damage to the structure of the granules and by dust formation and then, as a consequence, by a strongly increased tendency to cake. If, on the other hand, the first cooling is effected only to temperatures above 75°C, particularly above 80°C, granules will eventually be obtained, which, in addition to showing a strong tendency to cake together, will also have a smaller crushing strength. An explanation for this phenomenon is that the granules will then at least in part be added to the second bed while having crystal modification II and the said abrupt crystal transitions will afterwards take place in the finished granules.

In the second fluidized bed the granules are subsequently cooled to below 50°C. In this process cooling to a temperature below 30°C must be avoided, because the rapid transition to ammoniumnitrate crystal modification IV, which occurs at about 30°C, will be deterimental to the quality of the product and will cause in particular an increased caking tendency and a smaller mechanical strength of the granules.

The temperature in the fluidized bed of granules to be cooled is set as known in the art by regulating the temperature and the quantity of gas to be passed through, which is preferably air. To this end a gas flow having a temperature of ambient temperature to about 70°C is applied in the first bed, and in the second bed a gas flow having a temperature of about 15—30°C. In the second bed the cooling gas applied is preferably air having ambient temperature, which air has been pretreated for the removal of water. The gas flow escaping from this second bed, which gas flow generally has a temperature of between about 30 and 70°C, is then used to advantage as fluidizing gas in the first bed. The offgas from this first bed can be purified in a manner known per se from entrained dust, for instance with the help of a washer, a (wet) filter, a cyclone, and subsequently be discharged.

**0 075 359**

The products obtained from the second bed can be cooled further, if so desired, in any cooling installation, or be allowed to cool either in bulk or in bags. In order to reduce caking together the granules can be treated as known in the art with a coating agent, for instance an oil-fatty amine-mixture, a mixture of a polyoxyalkylate, a surface-active agent and an oil, etc. This coating can be applied to the finished granules obtained from the second bed. Preference is given to applying the coating to the granules during the ageing step while they are yet relatively hot, because this will result in a better distribution of this coating over the surface of the granules and consequently a smaller quantity of coating agent will suffice, and then an apparatus, for instance a coating drum, will be saved as well.

The process according to the invention can be applied in the cooling of various ammoniumnitrate-containing granules, for instance ammoniumnitrate, calciumammoniumnitrate, magnesiumammoniumnitrate and sulphateammoniumnitrate granules, and $NH_4NO_3$-containing NP or NPK granules. The way in which these granules are formed is not essential. The process in question can be applied to, among other things, granules obtained through granulation in a drum, screw, fluidized or spouted bed, or by prilling.

Example 1

Calciumammoniumnitrate granules (74% by wt. $NH_4NO_3$; 26% by wt. limestone; nitrogen content 26% by wt.) obtained by granulating in a screw granulator, followed by drying and screening, were fed with a temperature of 91.0°C to a bed of calciumammoniumnitrate granules. The bed was kept in fluidized condition by passing through an upward air stream having a temperature of about 40°C. Via an overflow the granules, having a temperature of 56°C, were passed to a receiving tank and there coated with 0.2% by wt. of a mixture consisting of 90 parts by weight of mineral oil and 10 parts by weight of fatty amines. After an average residence time of 5 minutes the granules treated were passed to a second bed of calciumammoniumnitrate granules, which was fluidized by passing through an air stream having a temperature of 25°C. The granules, having a temperature of about 40°C, were carried off via an overflow. The caking tendency of this product was determined via the so-called lump test. To this end the product was stored in small bags for 14 days under a pressure of 0.5 kg/cm$^2$, subsequently thrown twice from a height of 60 cm, upon which the weight percentage of the granules caked together was measured. The percentage of lumps of the above product was 0%. As standard for a product suitable for storage and shipment a lump percentage ⩽5% by wt. can be mentioned here.

Example 2 (Comparative example)

Calciumammoniumnitrate granules of the same composition and origin as in example 1 were cooled to 40°C in a bed of granules fluidized with air of 10°C, subsequently coated in the same way with an oil-fatty amine mixture and subjected to the lump test. The % by weight of lumps was 23%.

Examples 3—6

In the same way as in example 1 calciumammoniumnitrate granules were cooled in two steps in fluidized beds with storage (5 minutes) and coating of the granules between the two steps, and the percentage of lumps of the product granules was determined. The results are shown in table I.

TABLE I

| Example | Temp. granules fed | Temp. cooling air in 1st bed | Temp. granules from 1st bed | Temp. cooling air in 2nd bed | Temp. granules from 2nd bed | Lump % |
|---|---|---|---|---|---|---|
| 3 | 90.5°C | 30°C | 57°C | 30°C | 45°C | 0% |
| 4 | 90.5°C | 20°C | 55°C | 20°C | 44°C | 0% |
| 5 | 90.5°C | 20°C | 55°C | 20°C | 45°C | 0% |
| 6 | 91.5°C | 35°C | 55°C | 20°C | 40°C | 0% |

In example 6 the air stream obtained from the second bed was used as cooling air in the first bed.

Examples 7—10 (Comparative examples)

In the same way as in example 2 calciumammoniumnitrate granules were cooled in one fluidized bed, subsequently coated, and the percentage of lumps was determined. The results are shown in table II.

3

## 0 075 359

### TABLE II

| Example | Temp. granules before bed | Temp. cooling air in bed | Temp. granules after bed | Lump % |
|---------|---------------------------|--------------------------|--------------------------|--------|
| 7 | 90.5°C | 30°C | 53°C | 6% |
| 8 | 90.5°C | 20°C | 51°C | 21% |
| 9 | 90.5°C | 20°C | 50°C | 15% |
| 10 | 91.5°C | 10°C | 40°C | 21% |

### Example 11

Example 3 was repeated with this understanding that the coating mixture on the granules was applied after the second fluidized bed. The percentage of lumps was 0%.

### Example 12

In the same way as in example 1 a granular product consisting of $NH_4NO_3$ and $NH_4H_2PO_4$ (NP content 26—14), obtained by screw granulation, drying and screening, having a temperature of 93°C, was cooled in a first fluidized bed (temp. cooling air 35°C) to 60°C, subsequently coated in a storage tank (residence time 4 min) with 0.15% by wt. of an oil-fatty amine-polyoxyalkylate mixture and subsequently cooled in a second fluidized bed (temp. cooling air 25°C) to 40°C. The percentage of lumps was 0%.

### Example 13 (Comparative Example)

The same granular NP product as applied in example 12 was cooled in one fluidized bed (temp. cooling air 20°C) to 40°C and subsequently coated with 0.15% by wt. of the same coating mixture. The percentage of lumps was 25% by wt.

### Example 14

In the same way as in example 1 granular $NH_4NO_3$, obtained by granulation in a fluidized bed, followed by drying and screening, which granular $NH_4NO_3$ had a temperature of about 115°C, was cooled in a first fluidized bed (temp. cooling air 25°C) to 57°C, subsequently coated in a storage tank (residence time 4.5 min) with 0.1% by wt. of a mixture of 80 parts by weight of mineral oil and 20 parts by weight of fatty amine and then cooled in a second fluidized bed (temp. cooling air 25°C) to 41°C. The percentage of lumps was 0%.

### Example 15 (Comparative example)

The same granular $NH_4NO_3$ product as used in example 14 was cooled in one fluidized bed (temp. cooling air 20°C) to 41°C and subsequently coated with 0.1% by wt. oil-fatty amine mixture. The percentage of lumps was 17% by wt.

### Claims

1. Process for cooling hot ammoniumnitrate-containing granules, coming from a granulating zone, by means of cooling in a fluidized bed, characterized in that the hot granules, having a temperature higher than about 90°C, are cooled in a first fluidized bed to a temperature of between 55 and 75°C, the granules are allowed to age for a period of time of from 1 to 10 minutes without being heated or cooled, and the granules are subsequently cooled in a second fluidized bed to a temperature of between 30 and 50°C.

2. Process according to claim 1, characterized in that the granules are allowed to age for 2—5 minutes.

3. Process according to any one of claims 1 and 2, characterized in that the granules are treated during the ageing step with a coating agent.

4. Process according to any one of claims 1—3, characterized in that the ageing step is performed in the presence of granules containing ammoniumnitrate having crystal modification III.

5. Process according to claim 4, characterized in that part of the granules obtained in the ageing step is fed back to the ageing step.

6. Process according to any one of claims 1—5, characterized in that the fluidizing gas in the second fluidized bed is air substantially freed of water and having ambient temperature, and the offgas from this second bed is used as fluidizing gas in the first bed.

### Patentansprüche

1. Verfahren zur Kühlung von heißen, Ammoniumnitrat enthaltenden Körnern, die aus einer Granulierzone kommen, durch Kühlen in einem Fließbett, dadurch gekennzeichnet, daß man die heißen

4

Körner, die eine Temperatur von mehr als ungefähr 90°C haben, in einem ersten Fließbett auf eine Temperatur zwischen 55 und 75°C kühlt, die Körner während eines Zeitraumes von 1 bis 10 Minuten ohne Erhitzen oder Kühlen altern läßt, und anschließend die Körner in einem zweiten Fließbett auf eine Temperatur zwischen 30 und 50°C kühlt.

2. Verfahren nach Anspruch 1, dadurch gekennzeichnet, daß die Körner 2—5 Minuten lang altern gelassen werden.

3. Verfahren nach Anspruch 1 oder 2, dadurch gekennzeichnet, daß die Körner während der Alterungsstufe mit einem Überzugsmittel überzogen werden.

4. Verfahren nach einem der Ansprüche 1—3, dadurch gekennzeichnet, daß die Alterungsstufe in Gegenwart von Körnern, die Ammoniumnitrat mit der Kristallmodifikation III enthalten, durchgeführt wird.

5. Verfahren nach Anspruch 4, dadurch gekennzeichnet, daß ein Teil der in der Alterungsstufe erhaltenen Körner in die Alterungsstufe zurückgeführt wird.

6. Verfahren nach einem der Ansprüche 1—5, dadurch gekennzeichnet, daß das Fluidisierungsgas in dem zweiten Fließbett Luft ist, die im wesentlichen von Wasser befreit ist und Umgebungstemperatur hat, und das Abgas aus diesem zweiten Bett als Fluidisierungsgas in dem ersten Bett verwendet wird.

## Revendications

1. Procédé de refroidissement de granules chauds contenant du nitrate d'ammonium, en provenance d'une zone de granulation, par refroidissement dans un lit fluidisé, caractérisé en ce qu'on refroidit les granules chauds qui sont à une température de plus de 90°C, dans un premier lit fluidisé jusqu'à une température de 55 à 75°C, on laisse les granules vieillir pendant une durée de 1 à 10 minutes sans les chauffer ou les refroidir et ensuite on refroidit les granules dans un second lit fluidisé à une température entre 30 et 50°C.

2. Procédé selon la revendication 1, caractérisé en ce qu'on laisse vieillir les granules pendant 2 à 5 minutes.

3. Procédé selon l'une des revendications 1 et 2, caractérisé en ce qu'on traite les granules pendant le stade de vieillissement avec un agent d'enrobage.

4. Procédé selon l'une quelconque des revendications 1 à 3, caractérisé en ce qu'on effectue le stade de vieillissement en présence de granules contenant de nitrate d'ammonium ayant une modification cristalline III.

5. Procédé selon la revendication 4, caractérisé en ce qu'on retourne au stade de vieillissement une partie des granules provenant du stade de vieillissement.

6. Procédé selon l'une quelconque des revendications 1 à 5, caractérisé en ce que le gaz fluidisant dans le second lit fluidisé est l'air sensiblement débarrassé d'eau et à température ambiante, et le gaz d'échappement de ce second lit sert de gaz fluidisant le premier lit.